# EUROPÄISCHE PATENTSCHRIFT

(11) **EP 1 159 589 B1**
(45) Veröffentlichungstag und Bekanntmachung des Hinweises auf die Patenterteilung: **13.07.2005**
(21) Anmeldenummer: 00902611.3
(22) Anmeldetag: 19.01.2000
(51) Int. Cl.: G01J 5/08, G01J 5/00

(54) **VORRICHTUNG UND VERFAHREN ZUM MESSEN DER TEMPERATUR VON SUBSTRATEN**
DEVICE AND METHOD FOR MEASURING THE TEMPERATURE OF SUBSTRATES
PROCEDE ET DISPOSITIF POUR MESURER LA TEMPERATURE DE SUBSTRATS

(30) Priorität: 10.02.1999 DE 19905524
(43) Veröffentlichungstag der Anmeldung: 05.12.2001
(73) Patentinhaber: Mattson Thermal Products GmbH, 89160 Dornstadt (DE)
(72) Erfinder: HAUF, Markus, D-89335 Ichenhausen (DE)
(74) Vertreter: Wagner, Karl H., Dipl.-Ing.
(86) Internationale Anmeldenummer: PCT/EP2000/000375
(87) Internationale Veröffentlichungsnummer: WO 2000/047962

(56) Entgegenhaltungen:
- WO-A-94/00744
- DE-A- 2 150 963
- US-A- 5 442 727
- US-A- 5 624 590
- US-A- 5 769 540
- US-A- 5 841 110

## Beschreibung

Die Erfindung betrifft ein Verfahren und eine Vorrichtung zum Messen der Temperatur von Substraten, insbesondere von Halbleitersubstraten oder -wafern, mit mindestens einem Strahlungsdetektor zur Messung der vom Substrat emittierten Strahlung und einem das Sichtfeld des Strahlungsdetektors einschränkenden Element, das zwischen dem Substrat und dem Strahlungsdetektor angeordnet ist. Ferner betrifft die Erfindung eine Vorrichtung zur Messung einer Objekttemperatur eines Objekts, mit aus wenigstens einer wenigstens einem Heizelement umfassenden Heizvorrichtung zur Erwärmung des Objekts mittels elektromagnetischer Strahlung, mit wenigstens einem ersten Strahlungsdetektor der innerhalb eines ersten Gesichtsfeldes die vom Objekt kommende Strahlung erfaßt.

Die im folgenden näher beschriebene Erfindung findet vorteilhafterweise in sogenannten RTP-Anlagen (Rapid Thermal Processor) Anwendung, in denen Wafer thermisch behandelt werden. RTP-Anlagen sowie die in diesen Anlagen eingesetzten Schnellheizverfahren sind aus den Druckschriften DE 4 437 361 C, DE 4 012 615 C, DE 4 223 133 C oder der DE 4 41 439 1A sowie aus den US-Patentschriften 5 226 732, 5 359 693 und 5 628 564 bekannt. Weitere Schnellheizverfahren und Vorrichtungen sind in den Veröffentlichungen J. Nackos: 2nd International Rapid Thermal Conference, RTP'94. Monterey CA, Proc. p. 421-428 (1994), Arun K. Nanda, Terrence J. Riley, G. Miner et al:" Evaluation of Applied Materials Rapid Thermal Processor Using SEMATECH Metrologies for 0,25 µm Technology Thermal Applications" Part II, Presentation at the Rapid Thermal and Integrated Processing Conference MRS Spring Meeting '96, San Francisco CA und Terrence F. Riley, Arun K. Nandam G. Miner et al.: "Evaluation of Applied Materials Rapid Thermal Processor Using SEMATECH Methodologies for 0,25 µm Technology Thermal Applications" Part I.lbid sowie aus der Veröffentlichung R. Bremsensdorfer, S. Marcus and Z. Nenyei:"Patterns Related Nonuniformities During Rapid Thermal Processing", Presentation at the Rapid Thermal and Integrated Processing Conference MRS Spring Meeting '96, San Francisco CA und der nachveröffentlichten Druckschrift Z. Nenyei, G. Wein, W. Lerch, C. Grunwald, J. Gelpey and S. Wallmüller: "RTP Development Requirements", presented at RTP '97 Conference Sept. 3-5, 1997 New Orleans beschrieben. Bei sämtlichen dieser Verfahren ist es notwendig, die Temperatur wenigstens in einem Punkt bzw. einem Flächenausschnitt des Objekts, Substrats oder Wafers oder der gesamten Substratfläche während des thermischen Behandlungsprozesses zu messen. Zur Temperaturmessung ist im allgemeinen wenigstens ein Strahlungsdetektor, z.B. ein Waferpyrometer vorgesehen, der bzw. das die vom Wafer kommende elektromagnetische Strahlung innerhalb eines Gesichtsfeldes mißt, welches durch eine Optik, z.B. durch eine Feldstoppblende, die im allgemeinen eine Lochblende ist, definiert wird. Das Aufheizen des Wafers erfolgt durch die elektromagnetische Strahlung (im wesentlichen Wärme- oder Infrarotstrahlung) von Heizquellen, insbesondere von Stablampen, die langgestreckte virtuelle Bilder auf dem Wafer erzeugen. Beispielsweise wirkt ein Wafer aus Silizium bei Wafertemperaturen über etwa 600° C wie ein Spiegel mit einer Reflektivität von etwa 30%, so daß durch die spiegelnde Eigenschaft des Wafers virtuelle Bilder der Stablampen bzw. der Heizvorrichtung erzeugt werden. Im folgenden wird vereinfacht von virtuellen Bildern auf dem Wafer bzw. auf dem Substrat oder dem Objekt gesprochen.

Bei der Temperaturmessung wird im wesentlichen zwischen einseitig und zweiseitig beheizten Systemen unterschieden. Einseitig beheizte Systeme heizen den Wafer im wesentlichen nur von einer Seite auf. Die andere Seite hingegen ist der Temperaturmessung, z.B. mittels eines Waferpyrometers, vorbehalten. Dadurch wird eine von der Lampenstrahlung weitgehend ungestörte, vom Wafer oder einem Substrat emittierte Strahlung ermittelt, mittels der die Substrattemperatur bestimmt wird.

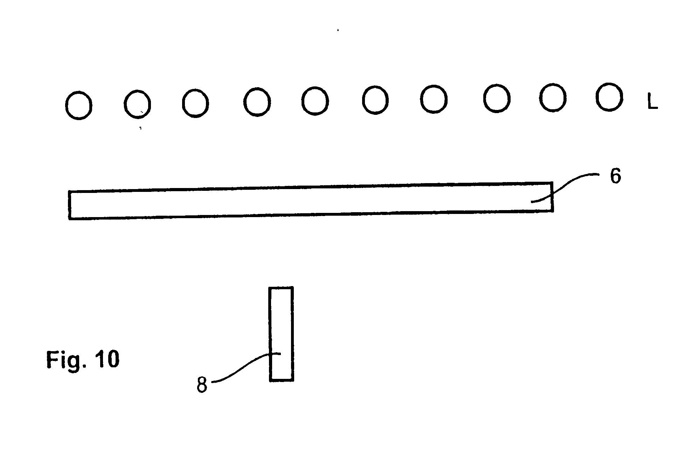

In Fig. 10 ist schematisch ein einseitig beheiztes System dargestellt. Das Substrat 6 wird von einer auf einer Seite des Substrats 6 angeordneten Lampenbank L erhitzt. Durch ein Waferpyrometer 8, das auf der der Lampenbank gegenüberliegenden Seite angeordnet ist, wird die vom Objekt emittierte Strahlung gemessen.

Nachteilig bei den einseitigen Heiz-Systemen ist, daß die Geschwindigkeit der Substraterwärmung aufgrund der einseitigen Heizung begrenzt ist, wobei im allgemeinen zusätzliche unerwünschte, durch Strukturen an der Substratoberfläche bedingte Temperaturgradienten innerhalb des Substrats auftreten, insbesondere wenn die Strukturen auf der der Heizquelle zugewandten Seite des Substrats gebildet werden oder vorhanden sind. Ferner wird für die Systeme mit einseitiger Beheizung in der Regel eine hoch reflektierende Kammer benutzt, innerhalb der das Substrat prozessiert wird. Diese hoch reflektierende Kammer begrenzt die Abkühlrate des Substrats, was bei manchen Prozessen nachteilig ist. Ein weiterer Nachteil besteht darin, daß es bei hoch reflektierenden Kammerwänden zu Ablagerungen wie z.B. Kondensation kommen kann, wodurch deren Reflektivität geändert wird, was einen Temperaturdrift bewirkt.

Die oben genannten Nachteile lassen sich bei einem zweiseitig Heiz-System, wie es z.B. in DE 44 37 361 beschrieben ist, erheblich verringern und zum Teil ganz vermeiden, da bei zweiseitigen Heiz-Systemen das Substrat von oben und von unten beheizt wird und deshalb im allgemeinen auf eine hochreflektierende Kammer verzichtet werden kann. Ferner kann aufgrund der beidseitigen Heizung eine größere Heizgeschwindigkeit erreicht werden. Da das Substrat auch von der Rückseite her beheizt wird, die im allgemeinen keine Strukturen aufweist, lassen sich die oben genannten strukturbedingten Temperaturinhomogenitäten auf der Substratoberfläche erheblich verringern. Im Gegensatz zum einseitigen Heiz-System ist bei zweiseitiger Heizung die durch das Waferpyrometer gemessenen Strahlung aufgrund der reflektiven Eigenschaften des Substrats allerdings noch mit einer von den Lampen kommenden Störstrahlung überlagert. Das am Substrat reflektierte, von den Lampen kommende Licht und die daraus resultierenden virtuellen Lampenbilder, erscheinen für das Waferpyrometer je nach der Rauigkeit der Substratoberfläche mehr oder weniger diffus.

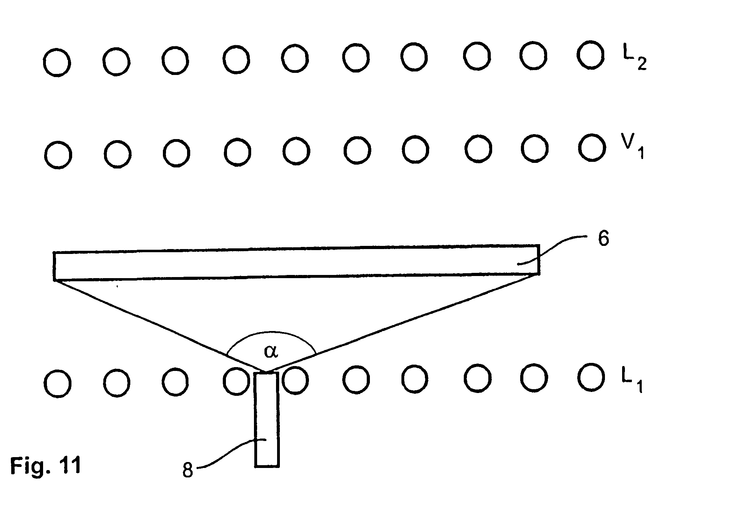

In Fig. 11 ist schematisch ein zweiseitiges Heiz-System dargestellt, welches auf beiden Seiten des Substrats 6 Lampenbänke L1 und L2 umfaßt. Zusätzlich sind die durch Reflexion am Substrat 6 entstehenden virtuellen Bilder V1 der Lampenbank L1 dargestellt. Die Lampenbänke L1, L2 können so angeordnet werden, daß deren virtuelle Bilder mit der jeweiligen anderen Lampenbank zur Deckung kommen. Wie aus Fig. 11 ersichtlich ist, mißt das Waferpyrometer innerhalb eines Gesichtsfeldes sowohl die vom Wafer emittierte Strahlung I_{w} als auch einen durch die reflektierenden Eigenschaften des Substrats bedingten Teil der Lampenstrahlung Iᵢ rᵢ , wobei Iᵢ die Lampenintensität der i-ten Lampe der Lampenbank L1 und rᵢ ein zur Lampe i gehöriger effektiver Reflexionskoeffizient des Substrats ist.

Ist das Substrat aus Silizium, so tritt bei Temperaturen unter 600 C die Überlagerung mit Störstrahlung sowohl bei einseitigen als auch bei zweiseitigen Heiz-Systemen auf, da Silizium in diesen Temperaturbereich für Infrarotstrahlung transparent ist, und das Waferpyrometer somit auch eine durch das Substrat transmittierte Lampenstrahlung erfaßt.

Das Waferpyrometer erfaßt also eine von den Lampen kommende, durch den Wafer transmittierte, und am Wafer reflektierte, sowie eine vom Wafer emittierte Strahlung, wobei der Anteil der einzelnen Komponenten von der Beschichtung des Substrats, der Substratdicke und/oder von der Substrattemperatur abhängt. Damit die transmittierte und die reflektierte Intensität der Lampen und ihrer virtuellen Bilder das Meßergebnis des Pyrometers nicht verfälschen, kann ein Teil der Wärmestrahlung der Lampen über mehrere Kanäle fächerartig einem Lampenpyrometer zugeführt werden. Die so gemessene Intensität kann zur Korrektur der vom Waferpyrometer gemessenen Intensität herangezogen werden. Dem Lampenpyrometer ist eine Abbildungsoptik, vorzugsweise eine Zylinderlinse, vorgeschaltet, die das Sichtfeld des Lampenpyrometers im wesentlichen rechteckförmig einschränkt. Durch die während des thermischen Behandlungsprozesses auftretenden Vibrationen, und thermisch bedingten Deformationen und Verkippungen des Wafers bewegen sich die virtuellen Bilder der Lampen relativ zu den Begrenzungen des Gesichtfeldes des Waferpyrometers, so daß Änderungen in der vom Waferpyrometer gemessenen Intensität der Wärmestrahlung auftreten. Dabei wird insbesondere der Beitrag der Lampenstrahlung durch Reflexion verfälscht, wodurch ein Fehler in der Temperaturmessung resultiert. Wird z. B. bei der Messung der Wärmestrahlung mit dem Waferpyrometer zwischen dem Wafer und dem Waferpyrometer gesichtsfeldbegrenzende Lochblende verwendet, so treten Intensitätsschwankungen aufgrund des runden, kontinuierlichen Randes des eingeschränkten Sichtfeldes des Waferpyrometers auf. Dadurch werden die Meßwerte für die Temperatur der Waferfläche verfälscht.

Bei den oben genannten RTP-Anlagen umfaßt die Heizvorrichtung meist mehrere Heizelemente, z.B. in Form von Stablampen, so daß mittels einer geeigneten Steuervorrichtung die elektromagnetische Strahlung jedes Heizelements individuell einstellbar ist. Durch die Möglichkeit der Steuerung können sich neben den vielfältigen Vorteilen bezüglich der Temperaturhomogenität über die Waferoberfläche und der flexiblen Gestaltung des Heizprozesses auch Nachteile für die Temperaturbestimmung des Substrats oder Wafers ergeben, insbesondere dann, wenn herkömmliche Wafer- und Lampenpyrometer verwendet werden. So können, wie oben beschrieben, gesichtsfeldbegrenzende Elemente der Pyrometer, oder allgemeiner der Temperatursensoren, die Meßgenauigkeit der Temperatur nachteilig beeinflussen, insbesondere dann, wenn zur Temperaturbestimmung die Intensitäten von Wafer- und Lampenpyrometer verglichen werden, um z.B. den Einfluß der Reflexion der Lampenstrahlung an der Substratoberfläche zu korrigieren. Beispielsweise können sich z.B. die oben genannte Vibrationen des Substrats, aber auch mögliche Intensitätsänderungen einzelner Heizelemente der Heizvorrichtung störend auf das Meßergebnis auswirken, insbesondere wenn die Heizvorrichtung räumlich inhomogen abstrahlt.

Aus der DE 41 14 367 A1 ist ein Pyrometer zur berührungslosen Temperaturmessung von laufenden Meßobjekten bekannt, bei dem eine Zylinderlinse zum Bündeln der vom Meßobjekt kommenden Strahlung vorgesehen ist.

Die Druckschriften JP 5-187922 (A) in Patent Abstract of Japan, Sect. P, Vol. 17 (1993), No. 609 (P-1640) sowie DE-OS 21 50 963 zeigen und beschreiben die berührungsfreie Messung von Temperaturen eines Objekts, wobei zwischen einer Optik und einem die Strahlung empfangenden Element eine Rechteckblende vorgesehen ist.

Die US-Patentschrift 5 061 084 zeigt und beschreibt eine RTP-Anlage, bei der zwei Pyrometer vorgesehen sind, die die von dem zu messenden Objekt und der Umgebung abgegebene Strahlung bzw. nur die von der Umgebung abgegebene Strahlung mißt.

Die WO 94/00744 A1 zeigt und beschreibt eine RTP-Anlage, bei der ein Strahlungsmesser die vom Wafer abgestrahlte Strahlung zu dessen Temperaturbestimmung mißt, wobei ein weiterer Strahlungsmesser vorgesehen ist, der die von den Lampen abgestrahlte Strahlung mißt.

In der US-Patentschrift 5 841 110 ist eine RTP-Anlage beschrieben, bei der ebenfalls zwei Pyrometer zur Messung der Wafertemperatur und der Umgebungs- bzw. Lampentemperatur vorgesehen ist.

Der Erfindung liegt die Aufgabe zugrunde, ein Verfahren und eine Vorrichtung zum Messen der Temperatur von Substraten anzugeben bzw. zu schaffen, mit dem bzw. mit der eine korrekte Bestimmung der Substrattemperatur auch bei Vibrationen bzw. Verkippungen des Substrats auf einfache Weise möglich ist.

Ausgehend von einer aus der DE-OS 41 14 367 bekannten Vorrichtung zum Messen der Temperatur von Substraten, insbesondere von Halbleiterwafern, mit mindestens einem Strahlungsdetektor zur Messung der vom Substrat emittierten Strahlung und einer das Sichtfeld des Strahlungsdetektors einschränkenden Blende, das zwischen dem Substrat und dem Strahlungsdetektor angeordnet ist, wobei die Ränder der Blende im wesentlichen geradlinig sind, wird die gestellte Aufgabe erfindungsgemäß dadurch gelöst, daß die Blende eine Polygonblende ist.

Die auf diese Weise erreichte Einschränkung des Sichtfeldes des Strahlungsdetektors zur Messung der vom Substrat emittierten Strahlung, beispielsweise eines Pyrometers, bietet gegenüber der bisher bekannten kreisförmigen Einschränkung des Sichtfeldes durch eine Lochblende den Vorteil, daß das Sichtfeld durch eine Polygonblende begrenzt wird, so daß das Pyrometer, nachfolgend auch Waferpyrometer genannt, trotz etwaiger Vibrationen oder Verkippungen des Substrats, beispielsweise eines Wafers, eine konstante Intensität der vom Wafer reflektierten Wärmestrahlung mißt, sofern die durch die Vibrationen oder Verkippungen hervorgerufene Wanderung der virtuellen Lampenbilder nicht größer als die zu den Lampenbildern senkrechten Begrenzungslinien einer Polygonstufe ist.

Durch die Polygonblende wird ein polygonartig begrenztes, mehrfach gestuftes Sichtfeld des Waferpyrometers erzeugt. Im Falle der Rechteckblende wird dagegen ein rechteckiges Sichtfeld und im Falle der Zylinderlinse ein im wesentlichen rechteckiges Sichtfeld erzeugt.

Vorzugsweise wird der Wafer durch Heizquellen, wie zum Beispiel Lampen, erwärmt. Dabei sind die Heizquellen vorteilhafterweise langgestreckte Heizelemente. Diese Heizelemente werden virtuell durch den Wafer abgebildet, so daß, wie bei einem Spiegel, langgestreckte virtuelle Bilder der Heizelemente durch den Wafer erzeugt werden.

Die Einschränkung des Sichtfeldes des Waferpyrometers sollte allgemein so erfolgen, daß Begrenzungslinien des Sichtfeldes des Waferpyrometers senkrecht von den Lampenbildern geschnitten werden. Aufgrund der geradlinigen Begrenzung des Sichtfeldes ändert sich die auf das Waferpyrometer fallende Strahlung nicht, wenn der Wafer vibriert oder verkippt wird. Bei herkömmlichen runden Blenden würde bei einer Kippung oder Vibration des Wafers eine Änderung der auf das Waferpyrometer auffallenden Lichtintensität auftreten.

Um den Beitrag der Lampenstrahlung in der von dem Waferpyrometer ermittelten Intensität zu eliminieren, wird die Wärmestrahlung der Lampen, beispielsweise fächerartig über mehrere Kanäle einem weiteren Strahlungsdetektor, vorzugsweise einem Pyrometer, zugeführt und die so gemessene Intensität zur Korrektur der vom Waferpyrometer gemessenen Intensität herangezogen. Dieser Strahlungsdetektor wird nachfolgend als Lampenpyrometer bezeichnet. Dem Lampenpyrometer kann eine Abbildungsoptik, vorzugsweise eine Zylinderlinse, vorgeschaltet sein, die das Sichtfeld des Lampenpyrometers im wesentlichen rechteckförmig einschränkt.

Es ist auch möglich, mehrere Waferpyrometer vorzusehen, die ebenfalls die von der Lampenstrahlung überlagerte Waferstrahlung messen. Ebenso können mehrere Lampenpyrometer vorgesehen sein.

Zur Bestimmung der Substrat- oder Objekttemperatur wird die gemessene Intensität des Waferpyrometers mit der gemessenen Intensität des Lampenpyrometers in Relation gesetzt. Dies ist bei einer kreisförmigen Begrenzung des Sichtfeldes des Waferpyrometers mit einer Lochblende, insbesondere beim Auftreten von Wafervibrationen, nicht möglich, da, bedingt durch die Lochblende, die vom Waferpyrometer gemessene Intensität dann ebenfalls fluktuiert.

In einer vorteilhaften Ausgestaltung der Erfindung befindet sich ein optisches Abbildungssystem, z. B. ein Linsensystem zwischen dem Wafer und dem Waferpyrometer, welches die durch das Element begrenzte Waferfläche optisch auf das Waferpyrometer abbildet. Die Blende befindet sich dabei vorzugsweise in der Zwischenbildebene dieses Linsensystems.

Vorzugsweise ist für die erfindungsgemäße Vorrichtung eine Einrichtung zum Drehen des Wafers vorgesehen, um die Waferfläche gleichmäßig zu erwärmen.

Außerdem kann die erfindungsgemäße Vorrichtung nicht nur einen, sondern mehrere Waferpyrometer aufweisen. Hierbei liegen die rechteckigen Sichtfelder dieser Waferpyrometer vorteilhafterweise parallel, so daß bei einer Waferdrehung immer entsprechende Umfangsabschnitte der Waferfläche auf die Waferpyrometer abgebildet werden. Dabei werden wieder Begrenzungslinien der rechteckigen Sichtfelder senkrecht von den Lampenbildern senkrecht geschnitten. Da der Wafer gedreht wird, ist die parallele Anordnung der rechteckförmigen Sichtfelder nur auf einer Halbebene des Wafers notwendig. Der Fächer-des Lampenpyrometers wird in entsprechender Weise angeordnet, so daß wiederum eine eindeutige Zuordnung der Intensität der Lampen zur Intensität der jeweiligen rechteckig begrenzten Waferfläche erfolgen kann. Bei dieser Anordnung ist ein einziges Lampenpyrometer ausreichend, welches dem Sichtfeld wenigstens eines der Waferpyrometer zugeordnet ist, sofern die Intensität über die Länge der Wendel innerhalb einer Lampe etwa konstant ist.

Die gestellte Aufgabe wird weiterhin durch ein Verfahren gelöst, bei dem das Sichtfeld des Waferpyrometers durch das Element zwischen dem Wafer und dem Waferpyrometer geradlinig begrenzt wird.

Aufgrund der geradlinigen Begrenzung des Sichtfeldes ändert sich die auf das Waferpyrometer fallende Strahlung nicht, wenn der Wafer vibriert oder verkippt wird. Bei herkömmlichen runden Blenden würde bei einer Kippung oder Vibration des Wafers eine Änderung der auf das Waferpyrometer auffallenden Lichtintensität auftreten.

Gemäß einer vorteilhaften Ausführungsform der Erfindung wird der Wafer durch mindestens eine vom Wafer beabstandete Heizquelle erwärmt. Da die von der Heizquelle auf den Wafer fallende Strahlung bei Vibration oder Verkippung des Wafers in einer anderen Richtung gespiegelt wird, ergibt sich bei geradliniger Sichtfeldbegrenzung wiederum keine Strahlungsintensitäts-Änderung für die auf das Waferpyrometer fallende Strahlung.

Bei einem Ausführungsbeispiel, bei dem ein zwischen dem Wafer und dem Waferpyrometer befindliches optisches Abbildungssystem, z. B. ein Linsenystem die durch das Element begrenzte Waferfläche optisch auf das Waferpyrometer abbildet, wird die vom Wafer auf das Waferpyrometer fallende Strahlung durch die Elementabbildung geradlinig begrenzt, wodurch wiederum die bereits zuvor genannten Vorteile erzielt werden.

Gemäß einer weiteren vorteilhaften Ausführungsform des Verfahrens, wird der Wafer während des Bestrahlungsvorgangs durch eine Rotationsvorrichtung gedreht, um eine möglichst gleichmäßige Temperaturänderung des Wafers und eine möglichst gleichmäßige Temperaturverteilung über die Waferoberfläche hinweg zu erreichen. In diesem Fall ist es vorteilhaft, wenn mehrere Waferpyrometer und zugeordnete, das Sichtfeld der Waferpyrometer mit linearer Abgrenzung beschränkende Elemente vorgesehen sind, die ihrerseits parallel zueinander liegen können.

Eine weitere Aufgabe der Erfindung ist es, eine Vorrichtung zum Messen der Temperatur von Substraten, im nachfolgenden auch Objekte genannt, anzugeben, bei der die Temperaturbestimmung im wesentlichen unabhängig von Intensitätsänderungen der Heizvorrichtung und/oder Ihrer virtuellen Bilder ist, bzw. daß in einer zweiten Ausführungsform der Erfindung, zur Ermittlung von Korrekturparametern, von einer Meßvorrichtung die von wenigstens einem Heizelement in das erste Gesichtsfeld gelangende elektromagnetische Strahlung bis auf eine intensitätsabhängige Funktion erfaßt wird.

Diese Aufgabe wird gelöst mit einer Vorrichtung zur Messung einer Objekttemperatur eines Objekts, mit einer aus wenigstens einer wenigstens ein Heizelement umfassenden Heizvorrichtung zur Erwärmung des Objekts mittels elektromagnetischer Strahlung, mit wenigstens einem ersten Strahlungsdetektor, der innerhalb eines ersten Gesichtsfeldes die vom Objekt kommende Strahlung erfaßt, wobei zur Ermittlung von Korrekturparametern von einer Meßvorrichtung die von wenigstens einem Heizelement in das erste Gesichtsfeld gelangende elektromagnetische Strahlung bis auf etwa eine intensitätsabhängige Funktion erfaßt wird. Diese Lösung wird nachfolgend als zweite Ausführungsform der Erfindung bezeichnet.

Gemäß der zweiten Ausführungsform der Erfindung ergibt sich vorteilhaft, das sich Intensitätsänderungen (sowohl räumliche als auch zeitliche) der Heizvorrichtung und/oder ihrer virtuellen Bilder (z.B. durch Wafervibration) nicht auf die Temperaturmessung des Objekts auswirken. Dies ist dadurch bedingt, weil die gemessene Intensitäten sowohl von der Heizvorrichtung als auch von deren virtuellen Bildern die selben relativen Änderungen erfahren, und diese damit synchron sowohl vom ersten Strahlungsdetektor als auch von der Meßvorrichtung erfaßt werden. Dadurch kann, z.B. durch Verhältnisbildung der Intensitätswerte, der Einfluß der Intensitätsänderungen (sowohl räumlich als auch zeitlich) auf die Temperaturmessung kompensiert werden. Dabei ist es vorteilhaft, wenn die intensitätsabhängige Funktion, die auch einen intesitätsunabhängigen Proportionalitätsfaktor einschließt, für jedes Heizelement etwa gleich ist.

Die Meßvorrichtung kann dabei eine Impedanzmessung der Heizelemente umfassen, um über eine Impedanz-Intensitätsrelation die von den Heizelementen emittierte Intensität zu ermitteln. Alternativ oder zusätzlich können zur Temperaturmessung der Heizelemente Thermoelemente eingesetzt werden, um über eine Temperatur-Intensitätsrelation die emittierte Intensität der Heizelemente zu bestimmen.

Ferner kann die Meßvorrichtung auch einen zweiten Strahlungsdetektor umfassen, wobei vorteilhaft der zweite Strahlungsdetektor innerhalb eines zweiten, die intensitätsabhängige Funktion oder den Proportionalitätsfaktor mitbestimmenden Gesichtsfeldes die von den Heizelementen emittierte Strahlung erfaßt, wobei unter dar Annahme eines für die elektromagnetischen Strahlung als Spiegel wirkenden Objekts das erste und das zweite Gesichtsfeld in wenigstens einer räumlichen Dimension nahezu gleich sind. Allgemein kann die Art der Übereinstimmung der Gesichtsfelder des ersten und zweiten Strahlungsdetektors (oder der Strahlungsdetektoren) der Geometrie der Heizquelle bzw. der Heizelemente der Heizquelle angepaßt' werden.

Es kann ferner vorteilhaft sein, mit mehreren Strahlungsdetektoren (zweite Strahlungsdetektoren) die vom Objekt kommende Strahlung zu messen, wobei die Gesichtsfelder im Hinblick auf die Objektoberfläche auf verschiedenen Oberflächenbereiche des Objekts begrenzt sind, und deren Gesichtsfelder in wenigstens einer räumlichen Dimension etwa dem des Gesichtsfeldes des zweiten Strahlungsdetektors entsprechen. In entsprechender Analogie können auch mehrere Strahlungsdetektoren (erste Strahlungsdetektoren) zur Messung der von der Heizvorrichtung, z.B. den einzelnen Heizelementen, emittierten Strahlung vorgesehen sein.

Mehrere Strahlungsdetektoren zur Messung der vom Objekt kommenden Strahlung sind besonders dann vorteilhaft, wenn das Objekt mittels einer Rotationsvorrichtung drehbar ist. Dann können durch die Anordnung der zweiten Strahlungsdetektoren, im Bezug auf die Rotationsachse der Rotationsvorrichtung, Oberflächenbereiche des Objekts in unterschiedlichen radialen Abständen erfaßt werden, was die Erfassung eines radialen Temperaturprofils ermöglicht. Erst diese ortsselektive Temperaturbestimmung des Objekts ermöglicht es, über eine Steuerung der Heizelemente der Heizvorrichtung, z.B. von stabförmigen Lampen insbesondere Halogen- oder Bogenlampen, ein in weiten Grenzen regelbares radiales Temperaturprofil über den Wafers einzustellen. Dabei ist es vorteilhaft, wenn über eine Steuervorrichtung die abgegebene elektromagnetische Strahlung jedes Heizelements individuell einstellbar ist.

Da z.B. die Temperaturabweichungen von den Sollwerten bei einen 300mm Wafer bei einer mittleren Wafertemperatur von 1000°C z.B. weniger als 2°C betragen dürfen, ist ein nahezu fehlerfreies Erfassen der elektromagnetischen Strahlung durch die Strahlungdetektoren notwendig. Dies wird jeweils durch die beschriebenen Ausführungsformen der vorliegenden Erfindung zuverlässig ermöglicht.

Ferner ist es weiter vorteilhaft, wenn die Gesichtsfelder der Strahlungsdetektoren der Symmetrie der Heizelemente angepaßt sind. So können z.B. bei stabförmigen Heizelementen durch geeignete Mittel wie Blenden und/oder einem optischen Abbildungssystem bestehend aus Linsen, Fressnellinsen und/oder Zonenplatten z.B. ein rechteckiges Gesichtsfeld definiert werden. Besteht die Heizvorrichtung aus parallel zueinander angeordneten stabförmigen Heizelementen, so werden vorteilhafterweise die Gesichtsfelder der Strahlungsdetektoren im wesentlichen durch koaxial zu den Heizelementen angeordneten Zylinderlinsen bestimmt. Dies hat den Vorteil, daß sich senkrecht zur Zylinderlinsenachse ein Gesichtsfeld öffnet, wodurch die über einen großen Winkel integrierte Reflektivität des Objekts bestimmbar ist. Ferner ist die Intensitätsbestimmung mit derartigen Gesichtsfeldern unsensitiv auf Vibrationen des Objekts (Wafers). Allgemein läßt sich die Begrenzung der Gesichtsfelder derart gestalten, daß unter der Annahme eines für die elektromagnetischen Strahlung der Heizvorrichtung spiegelnden Objekts eine geringfügige Verschiebung eines Gesichtsfeldes und des Heizelementes relativ zueinander die durch die Strahlungsdetektoren bestimmte Intensität im wesentlichen nicht beeinflußt. Die Art der Gestaltung hängt dabei im allgemeinen von der Geometrie der Heizvorrichtung bzw. der Heizelemente ab.

Die Erfindung wird nachstehend anhand bevorzugter Ausführungsbeispiele unter Bezugnahme auf die Figuren 1 bis 12 erläutert. Es zeigen:
- Fig. 1: einen Querschnitt durch eine Einrichtung zum thermischen Behandeln von Wafern zur Erläuterung der Funktionsweise der erfindungsgemäßen Vorrichtung nach der ersten Ausführungsform der Erfindung,
- Fig. 2: einen Querschnitt entlang der in Fig. 1 eingezeichneten Schnittlinie II - II,
- Fig. 3: eine schematische Darstellung eines Linsensystems, das in Zusammenhang mit der erfindungsgemäßen Vorrichtung einsetzbar ist,
- Fig. 4: ein Ausführungsbeispiel für ein das Sichtfeld des Waferpyrometers begrenzenden Elements in Form einer Polygonblende,
- Fig. 5: eine schematische Darstellung zur Erläuterung der Funktionsweise der erfindungsgemäßen Vorrichtung,
- Fig. 6: eine weitere Ausführungsform eines das Sichtfeld des Waferpyrometers begrenzenden Elements,
- Fig. 7: eine schematische Darstellung einer Ausführungsform mit mehreren Waferpyrometern,
- Fig. 8: eine schematische Darstellung einer Heizvorrichtung mit stabförmigen, parallel zueinander angeordneten Lampen, und die durch die Spiegelwirkung des Objekts entstehende virtuellen Heizquelle mit den virtuellen Lampenbildern,
- Fig. 9: eine Draufsicht einer schematischen Darstellung mit mehreren Waferpyrometern, deren Gesichtsfeld im wesentlichen durch koaxial zu den stabförmigen Lampen der Heizvorrichtung angeordneten Zylinderlinsen bestimmt ist,
- Fig. 10: eine schematische Darstellung eines RTP-Systems mit einseitiger Heizung, gemäß dem Stand der Technik,
- Fig. 11: eine schematische Darstellung eines RTP-Systems mit zweiseitiger Beheizung, gemäß dem Stand der Technik, und
- Fig. 12: eine schematische Darstellung eines zweiseitig beheizten RTP-Systems mit Wafer- und Lampenpyrometer.

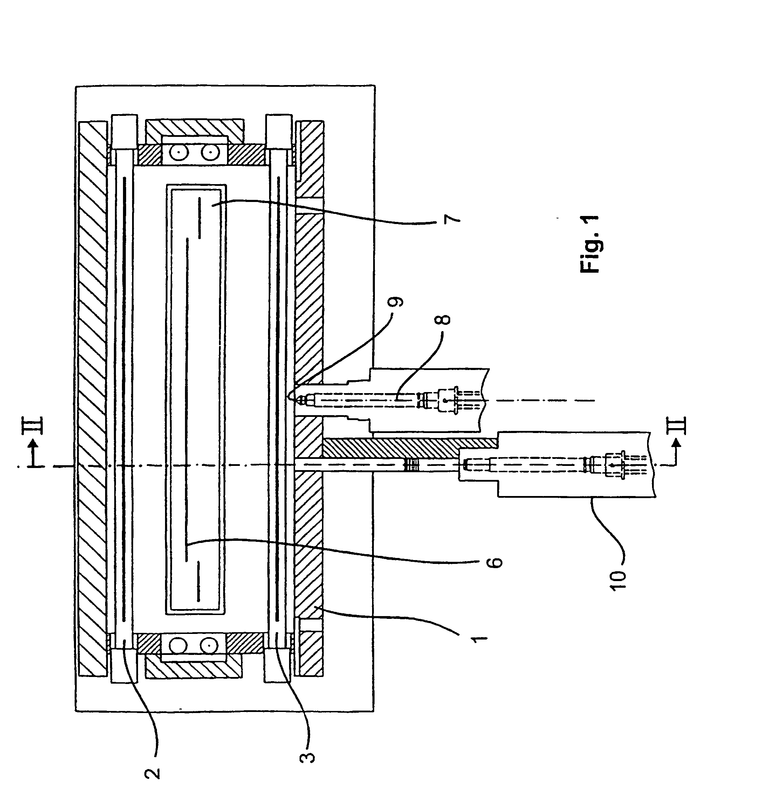

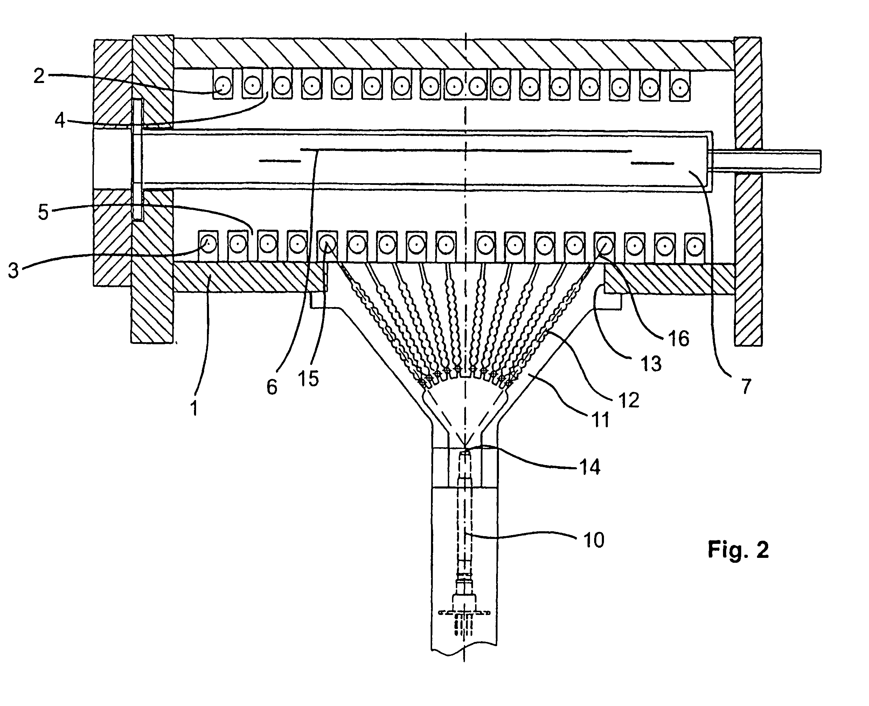

Der in Fig. 1 und 2 dargestellte Schnellheizofen weist ein Gehäuse 1 auf, an dessen oberer und unterer Innenwand jeweils eine aus mehreren Einzellampen oder Einzellampenröhren 2, 3 bestehende Lampenbank 4, 5 angebracht ist, die einen Halbleiterwafer 6 aufheizen, der in einer Reaktionskammer 7 zwischen den Lampenbänken 4, 5 im Gehäuse 1 angeordnet ist.

Vorteilhafterweise besteht die Reaktionskammer 7 im wesentlichen aus einem für die Lampenstrahlung im wesentlichen transparenten Material, das auch hinsichtlich der Meßwellenlängen oder der Meßwellenlängenspektren der Pyrometer oder der verwendeten Strahlungsdetektoren transparent ist. Mit Quarzgläser und/oder Saphir, die einen über das Lampenspektrum gemittelten Absorptionskoeffizienten von etwa 0.1 1/cm bis 0.001 1/cm haben, lassen sich geeignete Reaktionskammern für Schnellheizsysteme aufbauen, bei denen die Dicke der Reaktionskammerwand zwischen 1mm und mehreren Zentimetern betragen kann. Je nach Reaktionskammerwanddicke kann die Materialauswahl hinsichtlich des Absorptionskoeffizienten erfolgen.

Kammerwanddicken im Zentimeterbereich sind insbesondere dann erforderlich, wenn in der Reaktionskammer 7 ein Unterdruck, gegebenenfalls bis hin zum Ultra-Hochvakuum, oder ein Überdruck erzeugt werden soll. Beträgt beispielsweise der Reaktionskammer-Durchmesser etwa 300mm, so erhält man mit einer Quarzglasdicke von ca. 12mm bis 20 mm eine hinreichende mechanische Stabilität der Kammer 7, so da? sie evakuierbar ist. Die Reaktionskammer-Wanddicke wird entsprechend dem Wandmaterial, der Kammergröße und der Druckbelastungen dimensioniert.

Als Lampen werden bevorzugt Halogenlampen verwendet, deren Filament wenigstens teilweise eine Wendelstruktur aufweisen. Durch eine wenigstens teilweise Wendelstruktur läßt sich vorteilhaft ein bestimmtes vordefiniertes geometrisches und spektrales Abstrahlprofil der Lampe erreichen. Hierbei kann das Filament der Lampe z.B. abwechselnd gewendelte und ungewendelte Filamentabschnitte umfassen. Sowohl das geometrische als auch das spektrale Abstrahlprofil ist in diesem Falle im wesentlichen durch den Abstand benachbarter gewendelter Filamentabschnitte bestimmt. Eine weitere Möglichkeit, das Lampenabstrahlprofil zu definieren, besteht z.B. darin, daß die Dichte der Filamentstruktur, die Wendeldichte entlang des Filaments variiert wird.

Soll das Lampenprofil steuerbar sein, so lassen sich vorteilhaft Lampen, vorzugsweise Stablampen, mit mehreren einzelansteuerbaren Filamenten einsetzen. Lampen mit steuerbarem Lampenprofil sind insbesondere in Schnellheizanlagen zur Wärmebehandlung großflächiger Substrate, wie z.B. 300mm-Halbleiterwafer, vorteilhaft, da sich mit diesen Lampen und einer geeigneten Lampenansteuervorrichtung ein sehr homogenes Temperaturprofil entlang der Substratoberfläche erzielen läßt. Durch die Superposition der Einzelabstrahlprofile der Filamente ergibt sich ein in weiten Bereichen einstellbares Gesamtabstrahlprofil der Lampe. Im einfachsten Falle umfaßt z.B. eine Halogenlampe zwei Filamente, z.B. jeweils mit Wendelstruktur oder wenigstens teilweise gewendelter Struktur, wobei die Wendeldichte und/oder der Abstand der gewendelten Filamentabschnitte des ersten Filaments vom ersten Ende zum zweiten Ende der Lampe zunimmt, und die Wendeldichte und/oder der Abstand der gewendelten Filamentabschnitte des zweiten Filaments entsprechend umgekehrt vom ersten zum zweiten Ende der Lampe abnimmt. Das Gesamtabstrahlprofil kann somit durch die Wahl der Stromstärke in den beiden Filamenten in weiten Bereichen variiert werden. Eine weitere Ausgestaltungsmöglichkeit einer Lampe mit steuerbarem Abstrahlprofil besteht darin, daß das Filament der Lampe wenigstens drei elektrische Anschlüsse umfaßt, wobei jeweils zwischen den Anschlüssen unterschiedliche Betriebsspannungen gelegt werden. Dadurch läßt sich abschnittsweise die Filamenttemperatur, und damit die Abstrahlcharakteristik der Lampe entlang des Filaments steuern.

Alternativ zu den bisher beschriebenen Lampen lassen sich auch Plasma- oder Bogenlampen einsetzen, wobei auch hier das Abstrahlprofil einstellbar ist. So läßt sich beispielsweise das Lampenspektrum über die Stromdichte vom UV-Bereich bis hin zum nahen Infrarot einstellen.

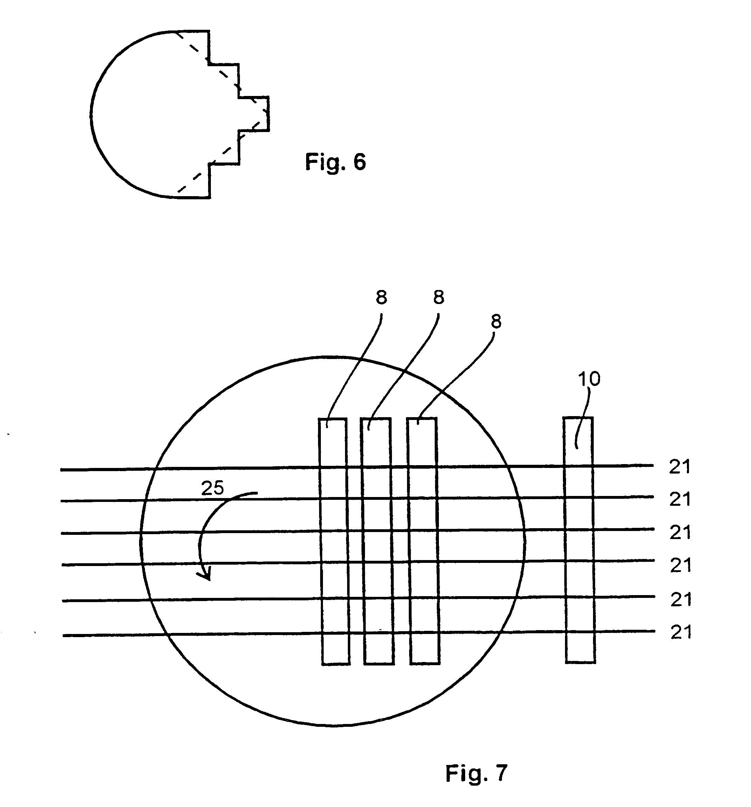

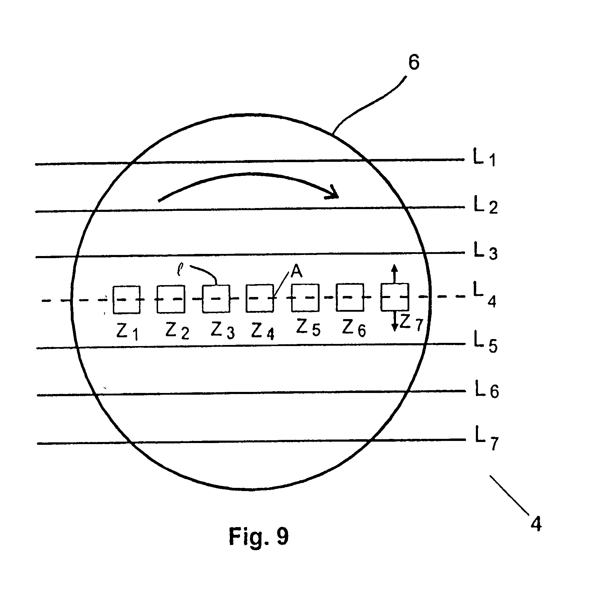

Aus Fig. 1 ist ersichtlich, daß ein Waferpyrometer 8, das auf der Unterseite des Gehäuses 1 angeordnet ist, über eine kleine Öffnung 9, die vorzugsweise, jedoch nicht notwendigerweise, im Zentrum des zu behandelnden Wafers 6 in einer Gehäusewandung ausgebildet ist, elektromagnetische Strahlung mißt, die vom Wafer 6 emittiert und reflektiert wird. Zusätzlich wird bei Siliziumwafern bei Temperaturen unter 600°C auch transmittiertes Licht gemessen. Es ist jedoch auch möglich, mehrere, parallel zur Waferfläche angeordnete Pyrometer zu verwenden, wie dies in den Figuren 7 und 9 dargestellt ist und nachfolgend beschrieben wird.

Vorrichtungen der zuvor beschriebenen Art sind beispielsweise in den nicht vorveröffentlichten DE 197 37 802 A, DE 197 54 385 A und DE 197 54 386 A derselben Anmelderin beschrieben, auf die zur Vermeidung von Wiederholungen Bezug genommen und die insofern zum Inhalt der vorliegenden Anmeldung gemacht werden.

Auf der Unterseite des Schnellheizofens ist eine optische Strahlungsmeßvorrichtung angeordnet, die ein Pyrometer 10 und - wie in Fig. 2 gezeigt - einen Kanalkörper 11 umfaßt, in dem Strahlungskanäle 12 fächerartig ausgebildet oder eingefräßt sind. Dieses Pyrometer 10 dient der Messung der Intensität der elektromagnetischen Strahlung, die von den Lampen auf den Wafer emittiert wird. An der der Lampenbank abgewandten Seite des Kanalkörpers 11 ist eine Linsenoptik 14, vorzugsweise eine Zylinderlinse, so angeordnet, daß deren Brennlinie sich an oder in der Nähe einer Stelle befindet, an der sich die Achsen der Strahlungskanäle 13 schneiden, so daß die auf die Linsenoptik 14 fallende Strahlung in das Pyrometer 10 gelangt. Wie am besten aus Fig. 2 zu ersehen ist, sind die Strahlungskanäle 12 im Kanalkörper 11 so ausgebildet oder ausgerichtet, daß die jeweilige Wendel 15 der einzelnen Lampen 3 auf der verlängerten Längsachse 16 der jeweiligen Strahlungskanäle 12 liegen. Die Strahlungsquellen und/oder die Strahlungskanäle sind bevorzugt so angeordnet, daß das Lampenpyrometersignal von einem Lampen- oder Filamentabschnitt resultiert, der frei von Filamenthaltevorrichtungen oder anderen, den Strahlungsfluß oder die Temperatur des durch die Strahlungskanäle beobachtenden Filament-oder Lampenabschnitts beeinträchtigenden Mitteln ist. Das Pyrometer 10 bzw. dessen Linsenoptik 14 "sieht" daher genau auf die jeweilige Lampenwendel 15, wodurch Hintergrundstrahlung, die nicht von der Lampenwendel 15 kommt, - wenn überhaupt - nur einen vernachlässigbar geringen Anteil am gesamten auf das Pyrometer 10, nachfolgend auch Lampenpyrometer genannt, fallenden Lichtes ausmacht. Durch das Anbringen zusätzlicher Blenden oder Abdeckungen in der Nähe der Lampenwendel und der jeweiligen Strahlungskanäle kann die Hintergrundstrahlung geziehlt ausgeblendet werden.

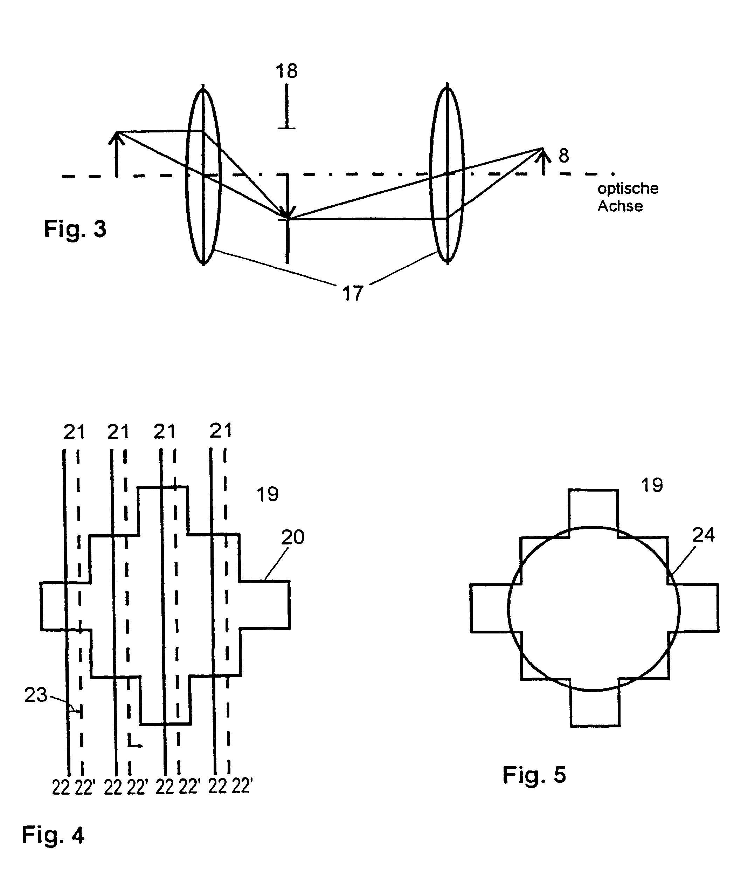

In Fig. 3 ist ein zwischen dem Wafer 6 und dem Waferpyrometer 8 befindliches Linsensystem 17 gezeigt, das die durch eine Blende 18 begrenzte Waferfläche auf das Waferpyrometer 8 abbildet. Die Blende 18 befindet sich dabei vorzugsweise in der Zwischenbildebene des Linsensystems 17.

Als Blende wird dabei eine in Fig. 4 dargestellte Polygonblende 19 bzw. eine Rechteckblende verwendet. Die Länge der geradlinigen Begrenzung einer Polygonstufe 20 sollte dabei mindestens so groß sein wie die Strecke der durch Vibrationen oder Verkippungen des Wafers 6 erzeugten Wanderungen von Lampenbildern 21. Die Wanderung der Lampenbilder 21 von der Position 22 vor einer Verkippung oder Vibration zu der Position 22' nach dieser Verkippung oder Vibration ist durch den Pfeil 23 beispielhaft verdeutlicht. Aufgrund der erfindungsgemäßen Maßnahme, die Ränder der Blende im wesentlichen geradlinig zur Bewegungsrichtung des Spiegelbildes auszurichten, entstehen durch die Verkippung für das Waferpyrometer keinerlei Intensitätsänderungen im Gegensatz zu Blenden mit gekrümmten Rändern, beispielsweise Lochblenden oder elliptisch geformten Blenden, bei denen die auf das Waferpyrometer fallende Intensität von der Lageverschiebung oder Vibration abhängt.

Die Größe der Polygonblende 19 bezüglich der bisher verwendeten Lochblende 24 ist in Figur 5 gezeigt. Dieser Figur ist zu entnehmen, daß die Fläche der Polygonblende 19, über die bei der Strahlungsmessung durch das Waferpyrometer 8 integriert wird, vorzugsweise genauso groß ist wie die entsprechende Integrationsfläche der bisher verwendeten Lochblende 24. Dies gilt auch für eine ellipsenförmige "Lochblende" sowie entsprechend für die Rechteckblende.

Eine weitere Ausführungsform einer polygonartig begrenzten Blende ist in Figur 6 angegeben. In diesem Beispiel wird als Blende ein Kreisviertel verwendet, dessen normalerweise geradlinige Begrenzungslinien polygonstufenartig ausgeprägt sind.

Eine im wesentlichen rechteckige Begrenzung des Sichtfeldes des Waferpyrometers 8 wird auch dadurch erreicht, daß man anstatt der im Zwischenbild des Linsensystems 17 befindlichen Rechteckblende eine Zylinderlinse 14 vor das Waferpyrometer 8 positioniert.

Alle Ausführungsformen des das Sichtfeld des Waferpyrometers 8 beschränkenden Elements sind so gestaltet, daß die Begrenzungslinien des Sichtfeldes geradlinig bzw. im Falle der Zylinderlinse im wesentlichen geradlinig sind, wobei Begrenzungslinien des Sichtfeldes vorzugsweise im wesentlichen senkrecht von den Lampenbildern 21 geschnitten werden, um die oben genannten Vorteile der Erfindung zu erzielen.

Eine weitere vorteilhafte Ausführungsform der Erfindung besteht darin, daß in der erfindungsgemäßen Vorrichtung mehrere waferpyrometer 8 mit parallel zueinanderliegenden Sichtfeldern verwendet werden. Dieser Fall ist in Figur 7 gezeigt. Wiederum schneiden die Lampenbilder 21 Begrenzungslinien der Sichtfeldes der in diesem Fall mehreren Waferpyrometer 8 senkrecht. Außerdem kann der Wafer 6 während der thermischen Behandlung und der Temperaturmessung gedreht werden, wie durch den Pfeil 25 in Figur 7 verdeutlicht wird. Durch die Drehung des Wafers reicht es aus, die parallel liegenden Sichtfelder nur auf einer Halbebene vorzusehen. Bei dieser Anordnung ist ein einziges Lampenpyrometer 10 ausreichend, welches dem Sichtfeld eines der Waferpyrometer zugeordnet ist, sofern die Intensität über die Länge der Wendel innerhalb einer Lampe konstant ist.

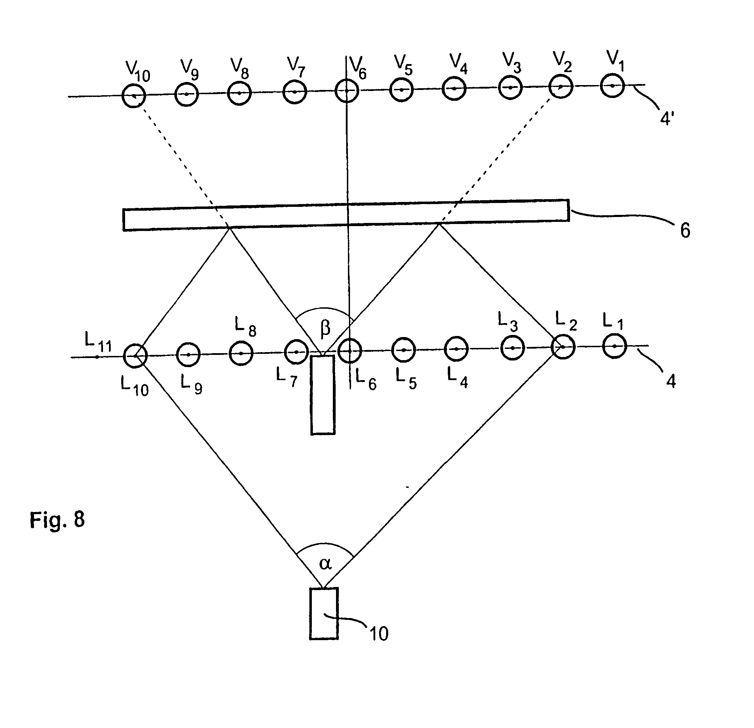

In Fig. 8 ist schematisch eine aus einer Lampenbank bestehende Heizvorrichtung 4 mit jeweils parallel zueinander angeordneten stabförmigen Lampen L1 bis L10 dargestellt. In einem Abstand zur Lampenbank 4 ist ein Wafer oder ein Objekt 6 angebracht, welches die von der Lampenbank abgegebene elektromagnetische Strahlung teilweise reflektiert, und welches von dieser aufgeheizt wird. Ebenfalls dargestellt ist ein Waferpyrometer oder auch ein zweiter Strahlungsdetektor 8, das bzw. der die vom Objekt kommende Strahlung erfaßt. Diese Strahlung setzt sich im wesentlichen aus der durch das Objekt emittierten Strahlung und durch einen Reflexionsanteil der Lampenstrahlung zusammen. In der Praxis beträgt dieser Reflexionsanteil für Temperaturen über 600°C bei einem Siliziumwafer etwa 30%. Die virtuellen Spiegelbilder der Lampen L1 bis L10 sind mit V1 bis V10 ebenfalls dargestellt und bilden die virtuelle Lampenbank 4'. Das Waferpyrometer 8 hat ein durch einen Winkel β vorgegebenes Gesichtsfeld (erstes Gesichtsfeld) und empfängt elektromagnetische Strahlung, die innerhalb dieses Gesichtsfeldes liegt.

In Fig. 8 ist ein weiteres Pyrometer, oder ein zweiter Strahlungsdetektor 10 dargestellt, das bzw. der die direkt von den Lampen L1 bis L10 der Heizvorrichtung 4 emittierten Strahlung mißt. Die Strahlung gelangt vorzugsweise mittels des in Fig. 2 dargestellten Kanalkörpers 11 zum Detektor 10. Auch das Pyrometer 10 hat ein durch einen Winkel α vorgegebenes Gesichtsfeld (zweites Gesichtsfeld), welches die Anzahl der beobachteten Lampen definiert.

Um die Temperatur des Objekts möglichst genau zu bestimmen, werden entsprechend der zweiten Ausführungsform der vorliegenden Erfindung das erste und das zweite Gesichtsfeld des Lampenpyrometers 10 und des Waferpyrometers 8 so gewählt, daß sie unter der Annahme eines für die elektromagnetische Strahlung spiegelnden Objekts 6 in wenigstens einer räumlichen Dimension gleich sind. Bei dem in Fig. 8 dargestellten Beispiel bedeutet dies, daß vom Waferpyrometer im wesentlichen derselbe Ausschnitt des virtuellen Spiegelbildes 4' der Lampenbank 4 erfaßt wird, der dem durch das Lampenpyrometer 10 erfaßten Ausschnitts der Heizvorrichtung 4 entspricht. Handelt es sich wie bei Fig. 8 um stabförmige Lampen, die in axialer Richtung im wesentlichen homogen emittieren, so ist es ausreichend, wenn die durch die Lampen- und Waferpyrometer 10, 8 erfaßten Bildausschnitte in Richtung senkrecht zu den Lampenachsen etwa gleich sind. Dies läßt sich bei entsprechender Pyrometeranordnung z.B. durch gleiche Winkel α und β erreichen.

Vorteilhafterweise werden im gezeigten Beispiel die Gesichtsfelder der Pyrometer 8, 10 im wesentlichen über Zylinderlinsen festgelegt, deren Brennlinie parallel zu den stabförmigen Lampen L1 bis L10 verlaufen. Durch die Zylinderlinse oder einer anderen geeigneten Abbildungsoptik oder durch Hinzufügen von Blenden lassen sich die Öffnungswinkel α und β festlegen. Ist die Strahlungsintensität der Lampen entlang der Lampenachse etwa konstant (was im allgemeinen für einen Filamentabschnitt zutrifft), so können Zylinderlinsen unterschiedlicher Brennlinienlänge für die Pyrometer 8, 10 verwendet werden, da, wie oben beschrieben, es ausreichend ist, wenn die Gesichtsfelder der Pyrometer 8 und 10 in Richtung senkrecht zur Lampenachse in wenigstens einer räumlichen Dimension etwa gleich sind. Damit ist sichergestellt, daß sowohl räumliche als auch zeitliche Änderungen der Intensitäten der Lampen und der virtuellen Lampenbilder sowohl durch das Wafer- als auch durch das Lampenpyrometer bis auf einen Proportionalitätsfaktor synchron erfaßt werden.

Entsprechend der vorliegenden Erfindung können z. B. neben den oben genannten Winkeln α und β, die eine Ebene senkrecht zur Richtung der Lampenachse aufspannen, alternativ oder zusätzlich auch die Öffnungswinkel der Wafer-und Lampenpyrometer in Richtung der Lampenachse, d.h. z. B. in Richtung Achse der Zylinderlinsen, etwa gleich gewählt werden. Dies hängt im Wesentlichen von der Kostanz der Lampenintensität entlang der Lampenachse und der geforderten Meßgenauigkeit der Objekttemperatur ab.

In Fig. 9 ist schematisch eine Draufsicht auf einen Wafer 6 und auf eine Lampenbank 4 mit stabförmigen, jeweils parallel zueinander angeordneten Lampen L1 bis L7 dargestellt. Durch eine Rotationsvorrichtung läßt sich der Wafer um die Achse A drehen. Die Fig. 9 zeigt die Anwendung mehrerer mit jeweils Zylinderlinsen Z1 bis Z7 versehenen Waferpyrometer. Dabei sind die Achsen der Zylinderlinsen parallel zu den Lampenachsen ausgerichtet, wodurch sich die Wafertemperatur, ähnlich wie in Fig. 7 dargestellt, radial erfassen läßt.

Im Gegensatz zu Fig. 7 sind die Waferpyrometer gemäß Fig. 9 entlang des Durchmessers des Wafers angeordnet, wobei sich bei einer bezüglich der Rotationsachse asymmetrischen Anordnung der Vorteil ergibt, daß selbst bei Wafern mit kleinen Durchmessern das radiale Temperaturprofil an ausreichend vielen Stellen gemessen werden kann, ohne die axialen Ausdehnung der Zylinderlinsen zu klein zu machen.

Mittels des radialen Temperaturprofils läßt sich mit einer Regelvorrichtung die Lampenbank steuern, wobei vorteilhaft jede einzelne Lampe individuell steuerbar ist. Damit läßt sich eine möglichst gleichmäßige Temperaturverteilung über den Wafer erzielen. Es sei nochmals darauf hingewiesen, daß insbesondere bei einer Einzellampenansteuerung die Gleichheit der Gesichtsfelder (genauer die Gleichheit bis auf eine intensitätsabhängige Funktion oder einen Proportionalitätsfaktor) von Wafer und Lampenpyrometer eine notwendige Voraussetzung für eine hohe Meßgenauigkeit der Wafertemperatur ist, da nur dann die durch den Wafer reflektierte Intensität richtig korrigierbar ist.

Unter Gleichheit der Gesichtsfelder ist gemäß der zweiten Ausführungsform der Erfindung zu verstehen, daß die Gesichtsfelder von Wafer- und Lampenpyrometer in Richtung inhomogener Intensitätsverteilungen der Heizvorrichtung bis auf einen Proportionalitätsfaktor (der auch 1 sein kann) oder im allgemeinen Falle bis auf eine bekannte intensitätsabhängige Funktion nahezu gleich sind. Im allgemeinen Falle werden vorteilhaft die Gesichtsfelder der Symmetrie der Abstrahlcharakteristik der Heizvorrichtung angepaßt. Dies kann z.B. durch die Wahl einer geeigneten Gesichtsfeldblende oder Abbildungsoptik, wie z.B. einer Polygonblende entsprechend der ersten Ausführungsform der Erfindung oder z.B. einer Zylinderlinse, erfolgen. Dadurch läßt sich z.B. erreichen, daß bei einer geringfügigen Verschiebung der Gesichtsfelder und der Heizelemente relativ zueinander die durch die Strahlungsdetektoren bestimmte Intensität im wesentlichen nicht beeinflußt wird. Dabei umfaßt der Begriff Heizelemente auch die etwaigen virtuellen Bilder der Heizvorrichtung, die durch eine teilweise Reflexion am Objekt entstehen.

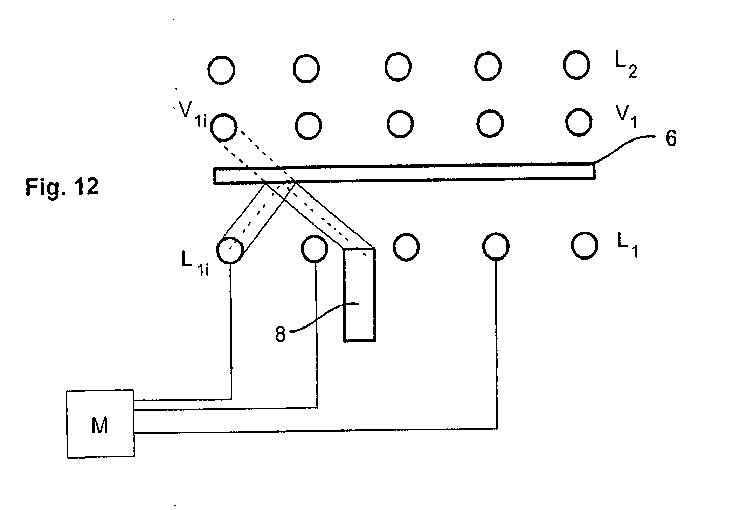

Wie mit Hilfe von Fig. 12 verdeutlicht, kann im allgemeinen gemäß der zweiten Ausführungsform der Erfindung der zweite Strahlungsdetektor (das Lampenpyrometer) durch eine Meßvorrichtung M ersetzt werden, die die von Heizelementen L1ᵢ der Heizquelle L1, vorzugsweise die von jedem Heizelement L1ᵢ , in das erste Gesichtsfeld des ersten Strahlungsdetektors 8 gelangende elektromagnetischen Strahlung I1ᵢ bis auf einen Proportionalitätsfaktor oder eine bekannte intensitätsabhängige Funktion erfaßt. Durch die reflektierenden Eigenschaften des Objekts (z.B. Wafers) 6 mißt der Strahlungsdetektor 8 neben der vom Objekt 6 in das erste Gesichtsfeld emittierten Strahlung Iₑₘ auch eine von jedem Heizelement L1ᵢ der Lampenbank L1 reflektierte Strahlung I1ᵢ*rᵢ , welche scheinbar von dessen virtuellen Bildern Vlᵢ emittiert wird. Dabei ist rᵢ ein effektiver, auf das Heizelement L1ᵢ, bezogener Reflexionskoeffizient.
Der Strahlungsdetektor 8 mißt also insgesamt die Intensität Iₜₒₜₐₗ = Iₑₘ + ΣI1ᵢ *rᵢ . Dabei ist vereinfacht angenommen, daß das Objekt 6 für die Strahlung der oberen Lampenbank L2 (deren virtuelles Bild nicht dargestellt ist) opak ist.

Zur Ermittlung der vom Wafer emittierten Intensität Iₑₘ ist also ein reflektiver Anteil ΣI1ᵢ *rᵢ zu korrigieren. Die Meßvorrichtung M mißt im allgemeinen die Intensität I_{M} = cᵢ *I1ᵢ für ein Heizelement L1ᵢ , wobei cᵢ eine durch die Meßvorrichtung vorgegebenen Konstante oder bekannte intensitätsabhängige Funktion ist, die z.B. durch eine Kalibration ermittelbar ist.

Die Meßvorrichtung M kann z.B. eine Impedanzmessung der Heizelemente, vorzugsweise der Lampenfilamente, umfassen, oder es kann z.B. die Filamenttemperatur der Lampen durch geeignet angebrachte Thermoelemente ermittelt werden, wobei die Funktionen oder Konstanten c, dann z.B. über Impedanz-Intensitäts- bzw. Temperatur-Intensitäts-Relationen bestimmt werden.

Erfindungsgemäß gilt cᵢ*I1ᵢ = kᵢ*I1ᵢ*rᵢ , wobei kᵢ eine zum Heizelement L1ᵢ gehörige intensitätsabhängige Funktion oder ein Proportionalitätsfaktor ist. Vorzugsweise wird die Meßvorrichtung so gewählt, daß die kᵢ für alle Heizelemente L1ᵢ etwa (bis auf Meßfehler) gleich sind, was insbesondere das Kalibrationsverfahren erheblich vereinfacht. Dies läßt sich z.B. mit der in Fig. 8 dargestellten Ausführungsform mit α = β erreichen. Damit kann mit Hilfe der Meßvorrichtung bei Kenntnis von cᵢ/kᵢ oder cᵢ und kᵢ der Reflexionsanteil der durch den Strahlungsdetektor 8 erfaßten Intensität korrigiert werden, und mittels der vom Wafer emittierten Intensität Iₑₘ ist dann die Temperatur des Objekts bestimmbar.

Um die Genauigkeit der Objekttemperatur weiter zu steigern, können vorteilhaft die erste und die zweite Ausführungsform der Erfindung miteinander kombiniert werden.

Die Erfindung wurde zuvor anhand bevorzugter Ausführungsbeispiele beschrieben.

## Patentansprüche

1. Vorrichtung zum Messen der Temperatur von Substraten (6), insbesondere von Halbleiterwafern, mit mindestens einem Strahlungsdetektor (8) zur Messung der vom Substrat (6) emittierten Strahlung und einer das Sichtfeld des Strahlungsdetektors (8) einschränkenden Blende (19), die zwischen dem Substrat (6) und dem Strahlungsdetektor (8) angeordnet ist, wobei die Ränder der Blende (19) im wesentlichen geradlinig sind, **dadurch gekennzeichnet, daß** die Blende (19) eine Polygonblende ist, deren Ränder rechtwinklig gestuft sind und im Wesentlichen senkrecht bzw. parallel zu einer durch Vibration oder Verkippung des Substrats erzeugten Wanderung/Bewegung eines auf dem Substrat erzeugten Bildes (21) eines Heizelementes (2, 3) ausgerichtet sind, und daß die Länge der Ränder einer Polygonstufe (20) mindestens so groß gewählt ist, wie die Strekke der durch Vibration oder Verkippung des Substrats erzeugten Wanderung der Bilder (21) der Heizelemente.

2. Vorrichtung nach Anspruch 1, **gekennzeichnet durch** eine Abbildungsoptik (17) zwischen dem Substrat (6) und dem Strahlungsdetektor (8).

3. Vorrichtung nach Anspruch 2, **dadurch gekennzeichnet, daß** sich die Blende (19) in einer Zwischenbildebene der Abbildungsoptik (17) befindet.

4. Vorrichtung nach Anspruch 1, **dadurch gekennzeichnet, daß** mehrere Strahlungsdetektoren (8) zur Messung der vom Substrat (6) emittierten Strahlung vorgesehen sind, und daß die Sichtfelder der Strahlungsdetektoren (8) zur Messung der vom Substrat (6) emittierten Strahlung parallel liegen.

5. Vorrichtung nach einem der vorhergehenden Ansprüche, **gekennzeichnet durch** eine Einrichtung zum Drehen des Substrats (6).

6. Vorrichtung nach Anspruch 1, **dadurch gekennzeichnet, daß** mindestens ein weiterer Strahlungsdetektor (10) zur Messung der Wärmestrahlung von mindestens einer Heizquelle (2, 3) vorgesehen ist.

7. Vorrichtung nach Anspruch 1, **dadurch gekennzeichnet, daß** das durch das Element eingeschränkte Sichtfeld des Strahlungsdetektors (8) zur Messung der vom Substrat (6) emittierten Strahlung dem Sichtfeld des Strahlungsdetektors (10) zur Messung der Wärmestrahlung der Heizquelle (2, 3) zugeordnet ist.

8. Vorrichtung nach Anspruch 1, **dadurch gekennzeichnet, daß** Abbildungen langgestreckter Heizquellen (2, 3) auf dem Substrat (6) Begrenzungslinien des Sichtfeldes senkrecht schneiden, die durch das Element für den Strahlungsdetektor (8) auf der Substratoberfläche gebildet werden.

9. Vorrichtung nach Anspruch 1, **dadurch gekennzeichnet, daß** die Strahlungsdetektoren (8, 10) Pyrometer sind.

10. Vorrichtung nach einem der vorhergehenden Ansprüche, **dadurch gekennzeichnet, daß** zwischen dem Substrat (6) und dem Strahlungsdetektor (8, 10) eine Zylinderlinse angeordnet ist.

11. Vorrichtung nach Anspruch 10, **dadurch gekennzeichnet, daß** die Zyhnderachse parallel zur Achse einer Stablampe (2, 3) einer Stablampen umfassenden Heizquelle ist.

## Claims

1. Device for measuring the temperature of substrates (6), particularly of semiconductor wafers, comprising at least one radiation detector (8) for measuring the radiation emitted by the substrate (6) and a screen (19), which restricts the viewing field of the radiation detector (8) and which is arranged between the substrate (6) and the radiation detector (8), wherein the edges of the screen (19) are substantially rectilinear, **characterised in that** the screen (19) is a polygon screen, the edges of which are stepped at right angles and are oriented substantially perpendicularly or parallelly to a migration/movement, which is produced by vibration or tilting of the substrate, of an image (21), which is generated on the substrate, of a heating element (2, 3), and that the length of the edges of the polygon step (20) is selected to be at least as large as the extent of the migration, which is produced by vibration or tilting of the substrate, of the images (21) of the heating elements.

2. Device according to claim 1, **characterised by** an imaging optical system (17) between the substrate (6) and the radiation detector (8)

3. Device according to claim 2, **characterised in that** the screen (19) is disposed in an intermediate image plane of the imaging optical system (17)

4. Device according to claim 1, **characterised in that** several radiation detectors (8) for measuring the radiation emitted by the substrate (6) are provided and the viewing fields of the radiation detectors (8) for measuring the radiation emitted by the substrate (6) are parallel

5. Device according to one of the preceding claims, **characterised by** equipment for rotating the substrate (6).

6. Device according to claim 1, **characterised in that** at least one further radiation detector (10) for measuring the thermal radiation of at least one heat source (2, 3) is provided

7. Device according to claim 1, **characterised in that** the viewing field, which is restricted by the element, of the radiation detector (8) for measuring the radiation emitted by the substrate (6) is associated with the viewing field of the radiation detector (10) for measuring the thermal radiation of the heat source (2, 3)

8. Device according to claim 1, **characterised in that** imagings of elongate heat sources (2, 3) on the substrate (6) perpendicularly intersect boundary lines of the viewing field which are formed on the substrate surface by the element for the radiation detector (8).

9. Device according to claim 1, charactensed in that the radiation detectors (8, 10) are pyrometers

10. Device according to one of the preceding claims, charactensed in that a cylinder lens is arranged between the substrate (6) and the radiation detector (8, 10)

11. Device according to claim 10, **characterised in that** the cylinder axis is parallel to the axis of the tube lamp (2, 3) of a heat source comprising tube lamps

## Revendications

1. Dispositif pour mesurer la température de substrats (6), en particulier de tranches de semi-conducteurs, muni d'au moins un détecteur de rayonnement (8) pour mesurer le rayonnement émis par le substrat (6) et un diaphragme (19) limitant le champ de vision du détecteur de rayonnement (8), qui est disposé entre le substrat (6) et le détecteur de rayonnement (8), les bords du diaphragme (19) étant sensiblement droits, **caractérisé en ce que** le diaphragme (19) est un diaphragme polygonal, dont les bords forment des marches à angle droit et sont dirigés sensiblement perpendiculairement ou parallèlement à un déplacement/mouvement, produit par vibration ou basculement du substrat, d'une image (21), produite sur un substrat, d'un élément chauffant (2,3), et **en ce que** la longueur des bords d'une marche polygonale (20) est choisie pour être au moins aussi grande que la distance du déplacement des images (21) des éléments chauffants, provoquée par la vibration ou le basculement du substrat.

2. Dispositif selon la revendication 1, **caractérisé par** une optique de reproduction (17) entre le substrat (6) et le détecteur de rayonnement (8).

3. Dispositif selon la revendication 2, **caractérisé en ce que** le diaphragme (19) se trouve à un niveau d'image intermédiaire de l'optique de reproduction (17).

4. Dispositif selon la revendication 1, **caractérisé en ce que** plusieurs détecteurs de rayonnement (8) sont prévus pour mesurer le rayonnement émis par le substrat (6), et que les champs de vision des détecteurs (8) pour mesurer le rayonnement émis par le substrat (6) sont parallèles.

5. Dispositif selon l'une des revendications précédentes; **caractérisé par** un système permettant la rotation du substrat (6).

6. Dispositif selon la revendication 1, **caractérisé en ce qu'**au moins un autre détecteur de rayonnement (10) est prévu pour la mesure du rayonnement thermique d'au moins une source de chaleur (2, 3).

7. Dispositif selon la revendication 1, **caractérisé en ce que** le champ de vision du détecteur de rayonnement (8), limité par l'élément, pour mesurer le rayonnement émis par le substrat (6) est associé au champ de vision du détecteur de rayonnement (10) pour mesurer le rayonnement thermique de la source de chaleur (2,3).

8. Dispositif selon la revendication 1, **caractérisé en ce que** les reproductions des sources de chaleurs allongées (2, 3) sur le substrat (6) recoupent perpendiculairement des lignes de délimitation du champ de vision, qui sont formées par l'élément sur la surface du substrat pour le détecteur de rayonnement (8).

9. Dispositif selon la revendication 1, **caractérisé en ce que** les détecteurs de rayonnement (8, 10) sont des pyromètres.

10. Dispositif selon l'une des revendications précédentes, **caractérisé en ce qu'**une lentille cylindrique est disposée entre le substrat (6) et le détecteur de rayonnement (8, 10).

11. Dispositif selon la revendication 10, **caractérisé en ce que** l'axe cylindrique est parallèle à l'axe d'une lampe tube (2,3) d'une source de chaleur comprenant des lampes tubes.
